# EUROPÄISCHE PATENTANMELDUNG

(11) **EP 1 072 300 A1**
(43) Veröffentlichungstag der Anmeldung: **31.01.2001**
(21) Anmeldenummer: 99123236.4
(22) Anmeldetag: 26.11.1999
(51) Int. Cl.: B01D 53/04, F25J 3/04

(54) **Verfahren und Vorrichtung zur Reinigung von Luft**

(30) Priorität: 29.07.1999 DE 19935383
(71) Anmelder: Linde Aktiengesellschaft, 65189 Wiesbaden (DE)
(72) Erfinder: Gemmingen von, Ulrich, Dr. Dipl.-Ing., 80797 München (DE)
(74) Vertreter: Imhof, Dietmar

(57) **Zusammenfassung**

Das Verfahren und die Vorrichtung dienen zur Reinigung von Luft von Verunreinigungen wie Wasser, Kohlendioxid, Lachgas, Ethylen und/oder Propan durch thermisch regenerierte Adsorption. In einem Adsorptionstakt wird zu reinigende Luft bei einer ersten Temperatur T₁ nacheinander durch eine erste Adsorptionszone, die ein erstes Adsorbens enthält, und durch eine zweite Adsorptionszone, die ein zweites Adsorbens enthält, geleitet. In einem Regeneriertakt wird ein Regeneriergas unter einer zweiten, höheren Temperatur T₂ in die erste Adsorptionszone eingeführt. In der ersten Adsorptionszone werden Wasserdampf und/oder Kohlendioxid im wesentlichen vollständig aus der Luft entfernt. Die zweite Adsorptionszone weist ein Adsorbens auf, das stark stickstoffbindende Metallionen enthält.

## Beschreibung

Die Erfindung betrifft ein Verfahren zur Reinigung von Luft von Verunreinigungen wie Wasser, Kohlendioxid, Lachgas, Ethylen und/oder Propan durch thermisch regenerierte Adsorption (TSA - temperature swing adsorption).

Solche Verfahren werden üblicherweise zur Reinigung von Einsatzluft für eine Tieftemperatur-Luftzerlegung angewandt, wobei atmosphärische Luft verdichtet und der Reinigung zugeführt wird. Die gereinigte Luft wird dann abgekühlt und mindestens teilweise einer Rektifiziersäule zugeführt.

Bei der thermischen Regenerierung werden die im Adsorptionstakt vom Adsorbens festgehaltenen Verunreinigungen wieder desorbiert, indem ein Regeneriergas unter einer Temperatur T₂ über das Adsorbens geleitet wird, die höher ist als die Temperatur T₁ im Adsorptionstakt. Die Temperaturdifferenz T₂ - T₁ beträgt mindestens 30 K und liegt beispielsweise im Bereich von 30 bis 250 K, vorzugsweise 80 und 180 K. Das Verfahren wird in mindestens einem Paar von umschaltbaren Behältern durchgeführt, die wechselweise beladen (Adsorptionstakt) und desorbiert (Regeneriertakt) werden, wie es beispielsweise aus DE 2064137 A bekannt ist. Übliche Adsorptionstemperaturen liegen bei 5 bis 35°C, vorzugsweise bei 7 bis 20°C.

Das wechselweise bei 80 bis 250°C thermisch regenerierte Adsorberpaar (die Molsiebstation) zur Vorreinigung der Luft vor dem kalten Teil einer rektifikatorischen Luftzerlegung stellt eine seit langem wohlbekannte und angewandte Technik dar (DE 2064137 A). Dabei werden hauptsächlich Wasser und CO₂ abgetrennt, sowie Azetylen (C₂H₂), das in flüssigem Sauerstoff (LOX) ein hohes Gefahrenpotential darstellt. Vor 1970 stand als Adsorptionsmittel noch kein Molekularsieb in technischem Maßstab zur Verfügung und es wurden statt dessen mehrere Silikageladsorber bei unterschiedlichen Temperaturen von Umgebungstemperatur (Wasserentfernung), 190 K (CO₂-Entfernung) bis hinab zu 90 K zur Kohlenwasserstoffabtrennung aus flüssigem Sauerstoff (LOX-Adsorber) betrieben, um den gleichen Effekt zu erzielen. In den vergangenen 30 Jahren haben sich aber infolge weltweit verstärkter Verbrennung fossiler Brennstoffe weitere sicherheitsrelevante Spurengase in der Luft angereichert, die ebenfalls vor oder innerhalb einer Tieftemperaturzerlegung wirksam ausgeschleust werden müssen. Dies sind die NₓO_{y}-Verbindungen, insbesondere das N₂O (0,3 bis 0,5 Vppm), und weitere ungesättigte und auch zum Teil gesättigte Kohlenwasserstoffe wie Ethylen und Propan (0,02 bis 0,1 Vppm). Werden sie nicht wirksam entfernt, können sie zu Verlegungen und Agglomerationen in LOX-Kreisläufen führen, insbesondere in Kondensatoren an Stellen mit Sauerstoffverdampfung, und stellen dort ein erhebliches Risikopotential dar.

Gewöhnliche TSA-Prozesse mit Schüttungen aus Alugel (activated alumina) und/oder Molsieb (Zeolith) 13X sind in ihrer Laufzeit meist aus Gründen der Ökonomie auf die Entfernung des CO₂ ausgerichtet und haben typische Umschaltzeiten von 2 bis 8 h, vorzugsweise etwa 5 h. Wesentlich kürzere Umschaltzeiten, wie sie bei Komponenten erheblich geringerer spezifischer Kapazität bedingt wären, erforderten mehr Regeneriergas (die Wärme müßte in entsprechend kürzerer Zeit durch die Adsorber geschoben werden) und mehr Regenerierenergie infolge von erhöhten Behälter- und Rohrleitungsverlusten. Beim üblicherweise verwendeten Molekularsiebtyp 13X (NaX) beträgt die spezifische Kapazität einer Molsiebstation (das Verhältnis aus Beladung zur Gasphasenkonzentration) für N₂O und Propan je 35 % und bei Ethylen 60 % (jeweils im Vergleich zu spezifischen Kapazität für CO₂) bei den Betriebsbedingungen 6 bis10 bar und 5 bis 20°C . Daher ergeben sich bei üblichen Betriebsbedingungen mit einer CO₂-Abreicherung von 1:10⁶ lediglich Rückhaltegrade von 60 bis 80 % für N₂O und C₃H₈ und 70 bis 90 % und für C₂H₄. Erst durch eine Halbierung der Laufzeit werden die für einen sicheren Betrieb erforderlichen Rückhaltegrade über 95 % erreicht. Dann muß aber mit 30 % vergrößerten Betriebskosten gerechnet werden, wenn der erhöhte Regeneriergasstrom überhaupt im Prozeß zur Verfügung steht, was oft nicht der Fall ist.

Eine bekannte Lösung des Spurenproblems ist der Kurzzeitadsorber ohne Regeneriergaserhitzer, der allein durch Druckwechsel (PSA) regeneriert wird, wie aus EP 862938 A und DE 3702190 A bekannt ist. Dieses Verfahren ist durch eine Verringerung der spezifischen Beladung um den Faktor fünf für CO₂ und um den Faktor zwei für die Spuren gekennzeichnet, die unempfindlicher auf eine Absenkung der Temperatur reagieren als das gut gebundene CO₂. Typische Laufzeiten bewegen sich zwischen 2 und 25 min. Die unterschiedliche Verringerung der Kapazität für die einzelnen Komponenten führt dazu, daß nun CO₂ und N₂O/C₃H₈ und C₂H₄ je etwa gleich gut zurückgehalten werden, wobei Rückhaltegrade von je 99 % erreichbar sind. Das Verfahren benötigt jedoch infolge der Wasserdesorption unter geringer Temperatur das 2,5-fache an Regeneriergas gegenüber einer TSA-Variante, hat infolge der häufigeren Umschaltung ein mehrfaches an Schaltverlusten und macht eine um 10 % größere Kompressorleistung erforderlich. Es kommt lediglich für O₂-Anlagen in Frage, die den Überschuß an Stickstoff aus der Luftzerlegung mangels Produktnutzung zur Regenerierung zur Verfügung stellen können. Ein weiterer gravierender Nachteil der PSA-Verfahren ist jedoch der gegenüber der TSA-Variante wesentlich verschlechterte Abreicherungsgrad an CO₂ infolge von Restbeladung bei Kaltregenerierung. Er sinkt von 1:10⁶ auf Werte um 1:10³ ab und erlaubt lediglich Produktreinheiten im Bereich von 0,1 bis 1 Vppm. Dies bedeutet, daß beispielsweise bei einem großen Luftzerleger mit 300.000 Nm³/h Luft pro Tag 10 kg CO₂ in den kalten Teil gefahren werden. Häufigeres Abtauen ist dann erforderlich, um die Verlegungen im Hauptwärmetauscher zur Coldbox abzubauen. TSA-Systeme hingegen lassen lediglich 0,01 kg CO₂ pro Tag durch, eine Menge, die problemlos im Gasstrom mitgetragen wird.

Eine weitere Lösung des Spurenproblems liegt in der Rekrutierung zusätzlicher LOX-Adsorber mit Silikagel zur Ausfilterung von N₂O aus LOX. Nachteilig ist hier neben dem konstruktiven Aufwand infolge der großen Temperaturänderungen bei der Regenerierung besonders der Umstand, daß LOX-Verluste entstehen und daß der teure Wertstoff Xenon ebenfalls zum Teil ins Regeneriergas verloren wird. Weiterhin besitzen die meisten LOX- und N₂O-tauglichen Materialien nur eine geringe Kapazität für Kohlenwasserstoffe.

Der Erfindung liegt daher die Aufgabe zugrunde, ein thermisch regeneriertes Adsorptionsverfahren und eine entsprechende Vorrichtung zu finden, die in der Lage sind, neben CO₂ und/oder Wasser auch sicherheitsrelevante Spurengase wie Lachgas, Ethylen und/oder Propan zuverlässig aus der zu reinigenden Luft zu entfernen, und dabei energetisch besonders günstig zu betreiben sind.

Diese Aufgabe wird durch die Merkmale des Patentanspruchs 1 gelöst. Besonders vorteilhafte Ausgestaltungen sind in den Patentansprüchen 2 bis 5 beschrieben. Unter "im wesentlichen vollständiger Entfernung" wird hier ein Zurückhalten zu mindestens 80 %, vorzugsweise mindestens 90 %, höchst vorzugsweise mindestens 95 % oder mindestens 99 % verstanden.

Bei der Erfindung werden die verschiedenen Trennaufgaben auf mindestens zwei Adsorptionszonen aufgeteilt, die jeweils mit spezifischen, auf die Trennaufgabe zugeschnittenen Adsorbentien ausgerüstet sind und nacheinander von der zu reinigenden Luft durchströmt werden. Die beiden Zonen können dabei durch zwei übereinander angeordnete Betten realisiert werden; alternativ kann die zweite Zone in einem getrennten Behälter angeordnet sein, der durch eine Leitung mit dem Behälter verbunden ist, der die erste Adsorptionszone enthält. In beiden Varianten kann die zweite Adsorptionszone gemeinsam mit der ersten thermisch regeneriert werden; im zweiten Fall kann die Regenerierung der beiden Zonen unabhängig voneinander vorgenommen werden, beispielsweise kann die zweite Adsorptionszone eine andere Regeneriertemperatur aufweisen oder sogar statt durch Temperaturwechsel mittels Druckwechsels desorbiert werden (PSA - pressure swing adsorption).

Die erste Adsorptionszone enthält beispielsweise ein konventionelles Adsorbens wie Alugel, Silikagel und/oder einen nicht-ausgetauschten Zeolith wie 13X. Sie kann in sich wiederum zweischichtig aufgebaut sein, wodurch sich insgesamt ein dreischichtiger Aufbau ergibt. Dabei durchströmt die zu reinigende Luft zum Beispiel zunächst eine erste Teilzone aus Alugel oder Silikagel, die bevorzugt Wasserdampf entfernt, und wird dann durch eine die zweite Teilzone aus Zeolith (beispielsweise CaX) geleitet, die besonders stark Kohlendioxid adsorbiert, bevor sie weiter zur zweiten Adsorptionszone geleitet wird.

In der zweiten Adsorptionszone wird ein stark sticksoffbindendes Adsorptionsmaterial eingesetzt. Unter "stark stickstoffbindend" ist hier die Materialeigenschaft zu verstehen, elementaren Stickstoff in relativ großem Maße durch Adsorption aus einem Gasstrom zu entfernen, insbesondere im Vergleich zu gängigen Adsorptionsmaterialien, die üblicherweise zur Reinigung von Luft von Wasser und/oder Kohlendioxid eingesetzt werden. So erzeugen Zusätze von stark stickstoffreaktiven, d.h. Nitrid-bildenden Metallionen im Adsorbens eine Erhöhung der Stickstoffbeladung um etwa einen Faktor von 2 mindestens 1.5, vorzugsweise um einen Faktor von 2.5 gegenüber dem undotierten Material.

Beispielsweise beträgt die typische spezifische Adsorptionskapazität für N2 bei 0°C (in Nl/kg bar)
an Alugel/Silicagel: 0,5 bis 2,
an Aktivkohlen: 9,
am NaX-Zeolithen-Molekularsieb 13X: 11
an CaA Molekularsieb 5A: 20 und
an CaX Molekularsieb: 28.
Stark stickstoffbindend im Sinne der Erfindung ist ein Material mit Werten vom mindestens etwa 18 Nl/kg bar bei 0°C. Dabei ist die Angabe der Adsorptionstemperatur als Bezugsgröße für den Vergleich der Materialien wesentlich, da sie die Kapazität beeinflußt. Derartige Materialien sind beispielsweise aus der Stickstoff-Sauerstofftrennung mittels Adsorption an sich bekannt.

Da das erfindungsgemäße Reinigungsverfahren bevorzugt stromaufwärts einer Luftzerlegungsanlage zur Gewinnung der Hauptkomponenten von Luft, also insbesondere (auch) von Stickstoff eingesetzt wird, erscheint es auf den ersten Blick wenig sinnvoll, in dieser Reinigungsstufe ein Adsorbens einzusetzen, das gerade eine der als Produkt gewünschten Komponenten besonders wirksam zurückhält. Jedoch sind die Stickstoff-Verluste infolge der langen Laufzeiten auch bei stark stickstoffbindenden Materialien noch im Bereich von 0.2-0.5% und damit vernachlässigbar klein gegen den typischen Verlust an Regeneriergas, der ca. 20% beträgt.

Im Rahmen der Erfindung hat sich zusätzlich überraschenderweise herausgestellt, daß solche stark stickstoffbindenden Adsorbentien auch Lachgas, Ethylen und Propan besonders wirksam adsorbieren. Dieser Zusammenhang liegt nicht direkt auf der Hand, da die molekularen Eigenschaften von Stickstoffverbindungen wie Lachgas nur bedingt Ähnlichkeit haben mit denjenigen des elementaren Stickstoffs und in Ethylen und Propan überhaupt keine Stickstoffatome vorhanden sind. Eine mögliche Erklärung dafür könnte das gemeinsame Merkmal einer chemischen Mehrfachbindung im Molekül sein, die die Reaktionsfähigkeit zu polaren Metallzentren im Adsorptionsmittel wesentlich erhöht, ohne daß die Erfindung an eine derartige Theorie gebunden wäre.

Die zweite Adsorptionszone ist also bei der Erfindung mit einem speziell auf die Spuren getrimmten Adsorptionsmittel ausgestattet. Hierfür eignet sich insbesondere CaX, ein Ca-ausgetausches NaX-Material. Es hat beispielsweise gegenüber 13X eine fünfmal so hohe spezifische Adsorptionskapazität für N₂O und zweimal so hohe Kapazität für die Kohlenwasserstoffe.

Ein derartiges Material weist jedoch auch Nachteile auf. So ist die Adsorptionskapazität für CO₂ im Vergleich zu 13X auf Werte um 80 % reduziert. Als weiteren gravierenden Mangel besitzt es eine um eine Größenordnung schlechtere Kinetik, so daß die nutzbare Laufzeit auf Werte um 60 % gegenüber 13X infolge der sehr ausgedehnten lokalen Adsorptionsfront absinkt. Bei einer dem 13X entsprechenden Nutzung sinken die CO₂-Abreicherungsgrade auf Werte um 1:10³ ab, und erreichen lediglich Verhältnisse wie bei der PSA-Variante (siehe oben). Zudem sind die ausgetauschten Materialien erheblich teurer und aufwendiger in der Herstellung und weisen eine geringere Standfestigkeit gegenüber flüssigem Wasser auf. Es erscheint also als Adsorbens für die Reinigung von atmosphärischer Luft stromaufwärts eines Tieftemperatur-Luftzerlegers zunächst eher ungeeignet.

Erfindungsgemäß wird auf den Einsatz eines einzigen Allroundmittels zugunsten einer Verwendung mehrerer Materialien mit sehr spezifischen Eigenschaften für die einzelnen Komponenten verzichtet. Sie können in der Weise im Adsorber geschichtet sein, daß sich das jeweils geeignetste Material dort befindet, wo die Hauptkonzentration der entsprechenden Komponenten erwartet wird. Beispielsweise läßt sich am Lufteintritt aktiviertes Aluminiumoxid (Alugel) zur Entfernung von H₂O, C₅₊, SOₓ, NO, NO₂, N₂O₃ und höheren Stickoxiden sowie sauren Bestandteilen vorsehen. Ersatzweise kommt auch Silikagel oder Molekularsieb 13X in Frage. Sodann eignet sich als zweite Schicht das herkömmliche Molekularsieb 13X zur Entfernung von CO₂ und C₂H₂, C₃H₆ und C₄₊ sowie dem größeren Teil von C₂H₄ und C₃H₈. Diese beiden Schichten bilden zwei Teilzonen innerhalb der "ersten Adsorptionszone". Abschließend folgt eine dritte Schicht, die "zweite Adsorptionszone" zur Entfernung von N₂O sowie der Reste aus C₂H₄ und C₃H₈. Dessen Materialien sind vorwiegend Ca-ausgetauschte Na-Zeolithe wie CaA (5A) und/oder CaX, aber auch der Einsatz von Li-, Ti- und/oder Bor-dotierten Zeolithen und/oder Gelen ist möglich. Neben einem Aufbau in Schichten kann bei geringfügigen Abstrichen in der Wirksamkeit im Bereich der oberen beiden Molekularsiebe eine gemischte Schüttung aus beiden Materialien oder ein Material aus Mischkristallen (composite) beider Arten zur Anwendung kommen.

Im Rahmen der Erfindung ist es insbesondere möglich, die herkömmliche und bewährte Molsiebstation mit TSA-Betrieb zusätzlich auch zur Rückhaltung von N₂O, C₂H₄ und C₃H₈ zu ertüchtigen, indem nicht auf die für die CO₂-Abtrennung optimale 13X-Schüttung zugunsten eines unspezifischen Allroundmaterials verzichtet wird, sondern lediglich eine für die oben erwähnten Spuren sehr spezifische Zeolithschicht aus A- oder X-Material oder einem Silikalit mit reinen oder gemischten Dotierungen aus Ca, Li, Ti und/oder Bor zugefügt wird. Dabei liegen beispielsweise die Ca-Na-Austauschgrade bei CaX und CaA zwischen 20 und 100 % Ca, vorzugsweise 70 % und die Austauschdotierungen mit Li, Ti und Bor im Bereich von 50 bis 100 %, vorzugsweise 90 %. Die Schicht aus Ca-ausgetauschtem Zeolith und/oder dotiertem Silikalit bildet hierbei die "zweite Adsorptionszone", die herkömmliche Molsiebstation die "erste Adsorptionszone" im Sinne der Erfindung.

Die Einbeziehung einer N₂O- und kohlenwasserstoffaktiven Schicht bewerkstelligt die effektive Ausschleusung dieser Spuren vor dem kalten Teil eines Luftzerlegers mittels der bewährten TSA-Technik und erhöht so die Sicherheit der Gesamtanlage erheblich. Die Einschränkung auf eine Zusatzschicht für N₂O, C₂H₄ und C₃H₈ läßt Materialien zu, die keine hohe CO₂-Kapazität haben, wie das sehr preiswerte Material 5A. Selbst bei der Anwendung teurer dotierter X-Zeolithe wird der erhöhte spezifische Preis dadurch erträglich, daß nur ein kleiner Schüttungsanteil aus diesen Materialien bestehen muß. Weiterhin garantiert die Belassung der für CO₂ optimalen 13X-Schicht, daß es zu keinen oder nur geringen Einbußen in der CO₂-Abreicherung kommt. Ein ganz besonderer Vorteil besteht darin, daß bestehende Anlagen durch das Aufbringen der kleinen Zusatzschicht auf einfache und ökonomische Weise nachgerüstet werden können, wobei hierfür erprobte Standardmaterialien zur Verfügung stehen.

Die verschiedenen Adsorbentien können als übereinander angeordnete Schichten ("liegender Adsorber") realisiert sein, und/oder als konzentrische ringförmige Schüttungen, die radial durchströmt werden ("Radialadsorber"). Für die Anwendung bei der Erfindung geeignete Anordnungen sind dem Aufsatz "Bauformen adsorptiver Trockner in Luftzerlegungsanlagen" des Erfinders in LINDE-Berichte aus Technik und Wissenschaft, 71/1994, Seiten 8 - 12 sowie DE 3243656 A, EP 402783 B1, DE 19600549 A und DE 19735389 C1 zu entnehmen. Die "zweite Adsorptionszone" für N₂O, C₂H₄, und C₃H₈ kann, wenn sie in einem separaten Behälter untergebracht ist, auch ohne Erhitzer regeneriert werden.

Außerdem betrifft die Erfindung Vorrichtungen gemäß Patentanspruch 6 und 8 sowie eine Anwendung gemäß Patentanspruch 7.

Die Erfindung sowie weitere Einzelheiten der Erfindung werden im folgenden anhand zweier Ausführungsbeispiele näher erläutert.

Drei Verfahrensbeispiele mit einer Variation der Schüttung sind ausgeführt:
(1) Axial durchströmte Molsiebstation mit übereinander angeordneten zylinderförmigen Schichtschüttungen aus aktiviertem Aluminiumoxid (Alugel) und NaX-Zeolith (Molekularsieb 13X) als Stand der Technik.
(2) Die Molsiebstation nach (1), wobei ein oberer Schüttbereich des 13X durch CaA-Zeolith (Molekularsieb 5A) ersetzt wurde, als erstes Ausführungsbeispiel der Erfindung.
(3) Die Molsiebstation nach (1), wobei ein oberer Schüttbereich des 13X durch CaX-Zeolith (86 %-Kalzium-ausgetauschtes Molekularsieb 13X) ersetzt wurde, als zweites Ausführungsbeispiel der Erfindung.

Allen Varianten ist gemeinsam:

| | | |
|---|---|---|
| Lufteintritt: | Menge: 21.500 Nm³/h, Druck: 6,0 bar(a), Temperatur T₁: 12,5°C Umschaltzeit der Molsiebstation: 7,0 h | |
| Regeneriergas: | Menge: 4.400 Nm³/h, Heiztemperatur T₂: 185°C, Kühltemperatur: 17°C, Druck: 1 bar(a), Heiz-/Kühlzeit: 2,2 h/4,2 h, Druckwechselzeit: 0,6 h | |
| Spurengehalt: | H₂O | 2450 Vppm |
| | CO₂ | 370 Vppm |
| | N₂O | 0,35 Vppm |
| | C₃H₈ | 0,08 Vppm |
| | SOₓ | 0,07 Vppm |
| | NOₓ | 0,05 Vppm |
| | C₂H₄ | 0,04 Vppm |
| | C₂H₂ | 0,02 Vppm |
| | C₃H₆ | 0,02 Vppm |
| | C₄₊ | 0,02 Vppm |
| Nicht abzutrennende Spuren: | Ne | 18 Vppm |
| | CH₄ | 2 Vppm |
| | H₂ | 0,6 Vppm |
| | CO | 0,3 Vppm |
| | Kr | 0,3 Vppm |
| | C₂H₆ | 0,1 Vppm |
| | Xe | 0,08 Vppm |
| | (Diese Komponenten werden bei allen Varianten mit weniger als 10 % zurückgehalten. Sie bilden jedoch auch kein Sicherheitsrisiko. Im Fall der Edelgase ist die Rückhaltung sogar unerwünscht.) | |

Schüttung (Varianten 1-3):

| | |
|---|---|
| (1) | 2000 kg (=200mm) Alugel |
| | 7000 kg (=900mm) Molekurarsieb 13X |
| (2) | 2000 kg (=200mm) Alugel |
| | 5300 kg (=680mm) Molekurarsieb 13X |
| | 1900 kg (=220mm) Molekularsieb 5A |
| (3) | 2000 kg (=200mm) Alugel |
| | 5200 kg (=680mm) Molekurarsieb 13X |
| | 1800 kg (=220mm) Molekularsieb CaX |

Behälterdurchmesser (bei allen Varianten): 4000 mm

Rückhaltegrade durch die einzelnen Varianten (1-3):

| | | |
|---|---|---|
| (1) | H₂O | > 99,99999% |
| | CO₂ | 99,9997% |
| | C₂H₂, C₃H₆, C₄₊, NOₓ (ohne N₂O) und SOₓ je 99,9 % | |
| | N₂O | 70 % |
| | C₃H₈ | 73 % |
| | C₂H₄ | 82 % |
| (2) | H₂O | > 99,99999 % |
| | CO₂ | 99,995 % |
| | C₂H₂, C₃H₆, C₄₊, NOₓ (ohne N₂O) und SOₓ je 99,9 % | |
| | N₂O | 92 % |
| | C₃H₈ | 88 % |
| | C₂H₄ | 93 % |
| (3) | H₂O | > 99,99999 % |
| | CO₂ | 99,999% |
| | C₂H₂, C₃H₆, C₄₊, NOₓ (ohne N₂O) und SOₓ je 99,9 % | |
| | N₂O | 98 % |
| | C₃H₈ | 94 % |
| | C₂H₄ | 97 % |

Fortschreitend von Variante (1) über (2) nach (3) ergeben sich als mittlere Gehalte in der Austrittsluft für die kritischen Komponenten:

| | (1) | (2) | (3) |
|---|---|---|---|
| CO₂ | 0,001 | 0,019 | 0,004 Vppm |
| N₂O | 0,105 | 0,028 | 0,007 Vppm |
| C₃H₈ | 0,022 | 0,010 | 0,005 Vppm |
| C₂H₄ | 0,007 | 0,003 | 0,001 Vppm |

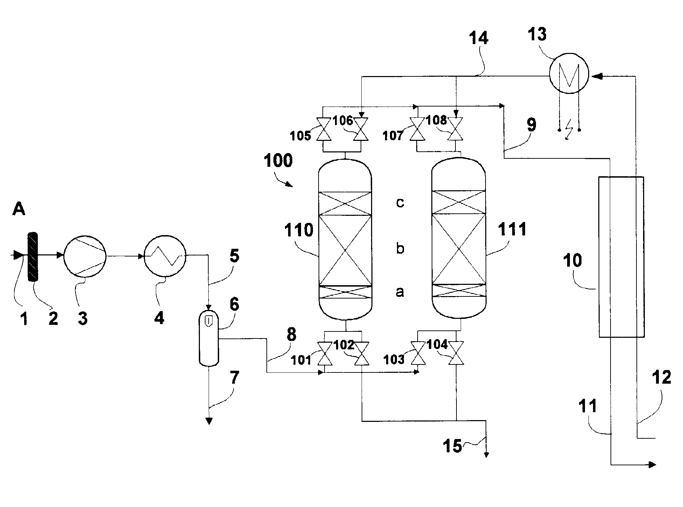

Die Zeichnung stellt die Vorrichtung von Beispiel (3) schematisch dar.

Über Leitung 1 wird atmosphärische Luft über ein Filter 2 von einem Hauptluftverdichter 3 angesaugt. Nach Nachkühlung 4 strömt die verdichtete Luft 5 in einen Wasserabscheider 6, aus dem flüssiges Wasser 7 abgezogen wird. Die von flüssigen Anteilen befreite Luft 8 wird zu der Reinigungsvorrichtung 100 geführt, die zwei Behälter 110, 111 aufweist. Mittels der Ventile 101 bis 108 wird die Reinigungsvorrichtung so betrieben, daß jeweils einer der Behälter 110, 111 mit Luft 8 beaufschlagt wird (Adsorptionstakt), während der jeweils andere Behälter 110, 111 regeneriert werden kann (Regeneriertakt).

Die gereinigte Luft 9 wird einem Hauptwärmetauscher 10 zugeführt, dort gegen Rückströme auf Rektifiziertemperatur abgekühlt und schließlich über Leitung 11 mindestens teilweise der Rektifiziersäule einer Tieftemperaturzerlegung zugeführt.

Ein Restgas 12 aus der Tieftemperaturzerlegung wird im Hauptwärmetauscher 10 auf etwa Umgebungstemperatur und weiter in einem Erhitzer 13 auf die Heiztemperatur T₂ des Regeneriertakts erwärmt. Das heiße Regeneriergas strömt dann über Leitung 14 in denjenigen Behälter 110, 111, der sich in der Heizphase (Heißspülung) des Regeneriertakts befindet. Stromabwärts der Reinigungsvorrichtung 100 wird das Restgas über Leitung 15 in die Atmosphäre abgegeben.

In einem konkreten Zeitpunkt befindet sich beispielsweise der Behälter 110 im Adsorptionstakt, das heißt die Ventile 101 und 105 sind offen, während die Ventile 102 und 106 geschlossen sind.

Behälter 111 befindet sich dabei im Regeneriertakt. Dabei werden verschiedene Phasen nacheinander durchlaufen: Druckabbau (nur 104 offen), Heißspülung (zusätzlich 108 offen und der Erhitzer 13 in Betrieb), Kaltspülung (Erhitzer ausgeschaltet), Druckaufbau (nur 103 offen).

Anschließend werden die Behälter umgeschaltet, so daß sich nun 111 im Adsorptionstakt und 110 im Regeneriertakt befinden.

Die Buchstaben a, b und c bezeichnen die drei Schüttungen in den beiden Behältern:
a Alugel
b Molekularsieb13X
c Molekularsieb CaX

In dem Beispiel bilden die Schichten a und b die "erste Adsorptionszone" und die Schicht c die "zweite Adsorptionszone". Altemativ dazu kan die erste Adsorptionszone (a+b) einschichtig aufgebaut sein und beispielsweise aus Alugel oder Molekularsieb 13X bestehen.

## Patentansprüche

1. Verfahren zur Reinigung von Luft von Verunreinigungen wie Wasser, Kohlendioxid, Lachgas, Ethylen und/oder Propan durch thermisch regenerierte Adsorption, wobei in einem Adsorptionstakt zu reinigende Luft bei einer ersten Temperatur T₁ nacheinander durch eine erste Adsorptionszone, die ein erstes Adsorbens enthält, und durch eine zweite Adsorptionszone, die ein zweites Adsorbens enthält, geleitet wird, und in einem Regeneriertakt ein Regeneriergas unter einer zweiten, höheren Temperatur T₂ in die erste Adsorptionszone eingeführt wird und wobei
• in der ersten Adsorptionszone Wasserdampf und/oder Kohlendioxid im wesentlichen vollständig aus der Luft entfernt werden, und
• die zweite Adsorptionszone ein Adsorbens aufweist, das stark stickstoffbindende Metallionen enthält.

2. Verfahren nach Anspruch 1, dadurch gekennzeichnet, daß das Adsorbens der zweiten Adsorptionszone Kalzium-, Lithium-, Titan- und/oder Bor-Ionen als stark stickstoffbindende Metallionen enthält.

3. Verfahren nach Anspruch 1 oder 2, dadurch gekennzeichnet, daß das Adsorbens der zweiten Adsorptionszone Zeolith und/oder Silikalit als Trägermaterial aufweist.

4. Verfahren nach einem Ansprüche 1 bis 3, dadurch gekennzeichnet, daß die zu reinigende Luft in der ersten Adsorptionszone nacheinander durch zwei Teilzonen geleitet wird, die unterschiedliche Adsorbentien enthalten, wobei die erste Teilzone insbesondere ein Alugel und/oder ein Silikagel und die zweite Teilzone insbesondere ein Zeolithmaterial aufweist.

5. Verfahren nach einem Ansprüche 1 bis 4, dadurch gekennzeichnet, daß die zweite Adsorptionszone eine Mischung und/oder Mischkristalle aus einem nicht-ausgetauschten Zeolith und einem mit stark stickstoffbindenden Metallionen dotierten Trägermaterial aufweist.

6. Vorrichtung zur Reinigung von Luft von Verunreinigungen wie Wasser, Kohlendioxid, Lachgas, Ethylen und/oder Propan durch thermisch regenerierte Adsorption mit einer ersten Adsorptionszone, die ein erstes Adsorbens enthält, das bevorzugt Wasserdampf und/oder Kohlendioxid bindet, mit einer zweiten Adsorptionszone, die ein zweites Adsorbens enthält, das stark stickstoffbindende Metallionen enthält und mit einer Heizeinrichtung, die mittels einer Regeneriergasleitung mit der zweiten und/oder mit der ersten Adsorptionszone verbunden ist.

7. Anwendung des Verfahrens nach einem der Ansprüche 1 bis 5 und/oder der Vorrichtung nach Anspruch 6 in einem Verfahren zur Tieftemperaturzerlegung von Luft, wobei die gereinigte Luft aus der zweiten Adsorptionszone mindestens teilweise abgekühlt und als Einsatzluft einer Rektifiziersäule zugeführt wird.

8. Vorrichtung zur Tieftemperaturzerlegung von Luft mit mindestens einer Rektifiziersäule und einer Einsatzluftleitung, die von der zweiten Adsorptionszone einer Vorrichtung nach Anspruch 6 durch einen Wärmetauscher zu der Rektifiziersäule führt.
